# EUROPEAN PATENT APPLICATION

(11) **EP 4 509 407 A1**
(43) Date of publication of application: **19.02.2025**
(21) Application number: 24194647.4
(22) Date of filing: 14.08.2024
(51) Int. Cl.: B64D 13/06

(54) **AIR CONDITIONING AND VAPOR CYCLE SYSTEM**

(30) Priority: 17.08.2023 US 202363520233 P; 17.11.2023 US 202318512538
(71) Applicant: Hamilton Sundstrand Corporation, Charlotte, NC 28217-4578 (US)
(72) Inventor: BRUNO, Louis J., Ellington, 06029 (US)
(74) Representative: Dehns

(57) **Abstract**

An air conditioning system includes an environmental control system (20) configured to condition a flow of medium. The environmental control system includes a thermodynamic device(24) having a compressor (26) and at least one turbine (28) operably coupled by a shaft (30) and at least one heat exchanger (34). A secondary system (70) has a working fluid circulating therethrough. At least one liquid loop (56) having at least one liquid flowing therethrough is fluidly connected to the at least one heat exchanger. The environmental control system is thermally coupled to the secondary system, via the at least one liquid loop. The at least one liquid provided at an outlet of the at least one heat exchanger is operable to cool the working fluid of the secondary system.

## Description

### CROSS-REFERENCE TO RELATED APPLICATIONS

This application claims the benefit of U.S. Application No. 63/520,233 filed August 17, 2023.

### BACKGROUND

Exemplary embodiments pertain to an environmental control system of an aircraft, and more particularly, to a vapor compression system thermally coupled to an environmental control system.

An aircraft includes at least several nonintegrated cooling systems configured to provide temperature control to various regions of the aircraft. For example, an aircraft environmental control system primarily provides heating and cooling to the aircraft cabin area. Since each system has a significant weight and power requirement, the overall efficiency of the aircraft is affected by these nonintegrated systems.

### SUMMARY

According to an aspect, an air conditioning system includes an environmental control system configured to condition a flow of medium. The environmental control system includes a thermodynamic device having a compressor and at least one turbine operably coupled by a shaft and at least one heat exchanger. A secondary system has a working fluid circulating therethrough. At least one liquid loop having at least one liquid flowing therethrough is fluidly connected to the at least one heat exchanger. The environmental control system is thermally coupled to the secondary system, via the at least one liquid loop. The at least one liquid provided at an outlet of the at least one heat exchanger is operable to cool the working fluid of the secondary system.

In embodiments the secondary system includes a condenser being arranged downstream from the at least one heat exchanger relative to a flow of the at least one liquid.

In embodiments the condenser is located directly downstream from the at least one heat exchanger relative to the flow of the at least one liquid.

In embodiments the at least one liquid includes a fuel.

In embodiments the at least one heat exchanger further comprises a first heat exchanger and a second heat exchanger. The second heat exchanger is arranged downstream from the first heat exchanger relative to the flow of medium.

In embodiments the at least one liquid loop having the at least one liquid flowing therethrough includes a first liquid loop having a first liquid and a second liquid loop having a second liquid. The first liquid loop is fluidly connected to the first heat exchanger and the second liquid loop being fluidly connected to the second heat exchanger.

In embodiments the second liquid is different than the first liquid.

In embodiments the secondary system includes a condenser and an evaporator. The condenser is arranged downstream from the first heat exchanger relative to a flow of the first liquid and the evaporator is arranged downstream from the second heat exchanger relative to a flow of the second liquid.

In embodiments the at least one heat exchanger is arranged downstream from the at least one turbine relative to the flow of medium.

According to another aspect, a method of operating an air conditioning system includes providing an environmental control system thermally coupled to a secondary system by at least one liquid loop. The at least one liquid loop has a flow of at least one liquid circulating therethrough. The method additionally includes circulating a working fluid within the secondary system and conditioning a medium within the environmental control system to form a conditioned medium. Conditioning the medium includes using the medium as a heat sink to cool the working fluid of the secondary system.

Embodiments using the medium as a heat sink to cool the working fluid include using the medium as a first heat sink to cool at least one liquid circulating through the at least one liquid loop and then using the at least one liquid as a second heat sink to cool the working fluid of the secondary system.

In embodiments the at least one liquid loop includes a first liquid loop having a first liquid and a second liquid loop having a second liquid and using the medium as a heat sink to cool the working fluid includes using the medium as the heat sink to cool the first liquid.

Embodiments include transferring heat to the working fluid via the second liquid.

In embodiments the second liquid is different than the first liquid.

Embodiments include adjusting the heat sink formed by the medium in response to an ambient air temperature.

Embodiments include adjusting the heat sink includes increasing an amount of heat absorbed by the medium.

Embodiments include adjusting the heat sink includes controlling a flow of the medium provided to an inlet of the environmental control system.

In embodiments the environmental control system includes a thermodynamic device including a compressor and a turbine operably coupled by a shaft. Conditioning the medium further includes compressing the medium via the compressor to form a compressed medium and extracting energy from the compressed medium via the turbine to form an expanded medium. The energy extracted from the compressed medium is used to drive the compressor.

Embodiments include adjusting the heat sink further comprises controlling a flow of medium provided to the turbine.

Embodiments include at least one liquid circulating through the at least one liquid loop is a fuel.

### BRIEF DESCRIPTION OF THE DRAWINGS

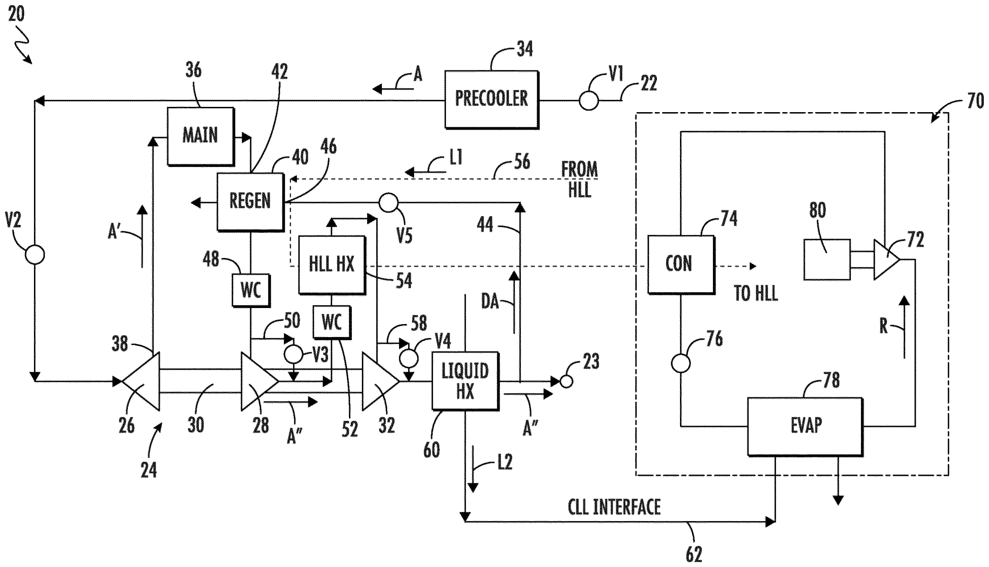

The following descriptions should not be considered limiting in any way. With reference to the accompanying drawings, like elements are numbered alike:
The Figure is a schematic diagram of an environmental control system according to an embodiment.

### DETAILED DESCRIPTION

A detailed description of one or more embodiments of the disclosed apparatus and method are presented herein by way of exemplification and not limitation with reference to the Figures.

With reference now to the Figure, a schematic diagram of a portion of an air cycle or air conditioning system, such as an environmental control system (ECS) unit or pack for example, is depicted according to non-limiting embodiments as illustrated. Although the environmental control system 20 is described with reference to an aircraft, alternative applications, such as another vehicle for example, are also within the scope of the disclosure. As shown in the figure, the ECS 20 can receive a medium A at an inlet 22 and provide a conditioned form of the medium A, also referred to herein as a conditioned medium, to one or more loads via an outlet 23. In an embodiment where the environmental control system 20 is used in an aircraft application, the medium A provided to the inlet 22 may be bleed air, which is pressurized air originating from, i.e., being "bled" from, an engine or auxiliary power unit of the aircraft. It shall be understood that one or more of the temperature, humidity, and pressure of the bleed air can vary based upon the compressor stage and revolutions per minute of the engine or auxiliary power unit from which the air is drawn.

In another embodiment, the medium A provided to the inlet 22 is fresh air, such as outside air for example. The outside air can be procured via one or more scooping mechanisms, such as an impact scoop or a flush scoop for example. In an embodiment, the medium A is ram air drawn from a portion of a ram air circuit. Generally, the fresh or outside air as described herein is at an ambient pressure equal to an air pressure outside of the aircraft when the aircraft is on the ground and is between an ambient pressure and a cabin pressure when the aircraft is in flight. In such embodiments, the fresh air may be pressurized by an electrically powered compressor upstream from the inlet 22.

The ECS 20 additionally includes at least one thermodynamic device 24. A thermodynamic device 24 is a mechanical device that includes components for performing thermodynamic work on a medium (e.g., extracts work from or applies work to the medium A by raising and/or lowering pressure and by raising and/or lowering temperature). Examples of a thermodynamic device 24 include an air cycle machine, such as a two-wheel air cycle machine, a three-wheel air cycle machine, a four-wheel air cycle machine, etc. As shown, the thermodynamic device 24, also referred to herein as an air cycle machine, may include a compressor 26 and at least one turbine 28 operably coupled by a shaft 30. In an embodiment, the thermodynamic device 24 includes two turbines 28, 32. In such embodiments, the medium A may be configured to flow through the turbines 28, 32 in series, or alternatively, in parallel.

A compressor 26 is a mechanical device configured to raise a pressure of a medium and can be driven by another mechanical device (e.g., a motor or a medium via a turbine). Examples of compressor types include but are not limited to centrifugal, diagonal or mixed-flow, axial-flow, reciprocating, ionic liquid piston, rotary screw, rotary vane, scroll, diaphragm, air bubble, etc. A turbine, such as any of turbines 28 and 32 for example, is a mechanical device that expands a medium and extracts work therefrom (also referred to as extracting energy) to drive the compressor 26 via the shaft 30.

The ECS 20 may include at least one heat exchanger operable to condition the medium A. As shown, the medium A provided at the inlet 22 may be conditioned, for example cooled, within a heat exchanger 34 before being delivered to the thermodynamic device 24. A medium provided as a heat sink within the heat exchanger 34 to cool the medium A may be ram air, engine fan air, or fuel. In the illustrated, non-limiting embodiment, outlet of the heat exchanger 34 is fluidly connected to an inlet of the thermodynamic device 24, such as an inlet of the compressor 26. Accordingly, the cooled medium A output from the heat exchanger 34 may be provided directly to the compressor 26. The act of compressing the medium A (within the compressor 26) heats and increases the pressure of the medium A.

An inlet of a main heat exchanger 36 is fluidly connected to the outlet of the compressor 26. The compressed medium A' output from the compressor outlet 38 may be conditioned, for example further cooled, within the main heat exchanger 36. Any suitable secondary fluid or medium may be used to cool the compressed medium A' within the main heat exchanger 36.

A first inlet 42 of a regeneration heat exchanger 40 may be located downstream from and in fluidly communication with the main heat exchanger 36 relative to the flow of the compressed medium A'. In an embodiment, the regeneration heat exchanger 40 is an air-air heat exchanger configured to utilize excess cooling capacity of the ECS 20 to further cool the compressed medium A'. For example, as will be described in more detail below, part of a conditioned form of the medium ready to be delivered to one or more loads of the vehicle, such as the cockpit for example, may be diverted along a regeneration pathway 44 to a second inlet 46 of the regeneration heat exchanger 40. At the regeneration heat exchanger 40, the compressed medium A' may be cooled via a thermal exchange with this diverted medium DA. The heated diverted medium DA may then be exhausted overboard or provided to another component of subsystem of the aircraft.

An outlet of the regeneration heat exchanger 40 may be fluidly connected to an inlet of the first turbine 28. However, in the illustrated, non-limiting embodiment, water may be removed from the further cooled compressed medium A' such as via a water collector 48 for example, before being provided to an inlet of the first turbine 28. It should be appreciated that at the water collector 48, the compressed medium A' is at its highest pressure within the ECS 20, and therefore, the water collector 48 may be considered a high-pressure water collector.

Within the first turbine 28, energy is extracted from the compressed medium A' to form an expanded medium A". The work extracted from the compressed medium A' in the first turbine 28 drives the compressor 26. The pressure of the medium A" output from the first turbine 28 is at a middle pressure, a pressure lower than upstream from the first turbine 28 but higher than the pressure of the medium A at the air cycle machine outlet (outlet of turbine 32). In some embodiments, all or at least a portion of the flow of compressed medium A' may be configured to bypass the first turbine 28 via bypass conduit 50.

In an embodiment, the expanded medium A" or the compressed medium A' from the bypass conduit 50 is provided to a middle-pressure water collector 52 configured to remove moisture therefrom. The middle-pressure water collector 52 is configured to coalesce moisture in the form of a fog within the expanded medium A" and remove the free moisture from the flow of the expanded medium A". The temperature of the expanded medium A" output from an outlet of the first turbine 28 may be above freezing to facilitate this downstream water removal. In an embodiment, the temperature of the expanded medium A" at and downstream from the outlet of the first turbine 28 is maintained above freezing when the aircraft is at lower altitudes where water may be present.

The ECS 20 may be operably coupled, for example thermally coupled, to at least one liquid loop having a flow of at least one liquid circulating therethrough via one or more heat exchangers. In the illustrated, non-limiting embodiment, the expanded medium A" output from the middle-pressure water collector 52 is provided to another heat exchanger, such as a first heat exchanger 54 configured as an air-liquid heat exchanger. At the first heat exchanger 54, the expanded medium A" is arranged in a heat transfer relationship with a liquid L1 provided from a first liquid loop 56, such as used to cool one or more loads of the vehicle. Regardless of the source of the first liquid L1, within the air-liquid heat exchanger 54, thermal energy is transferred between the expanded medium A" and the liquid L1. In an embodiment, the expanded medium A" is heated by the liquid L1 and the resulting cooler liquid L1 may then directed to one or more heat loads of the liquid loop 56. In embodiments where the expanded medium A" heat acts as a heat sink within the air-liquid heat exchanger 54 and absorbs heat from the liquid L1 of the liquid loop 56, the first liquid loop 56 may be considered a hot or heating liquid loop.

From the air-liquid heat exchanger 54, the expanded medium A" may be provided to the second turbine 32. The energy extracted from the expanded medium A" within the second turbine 32 is also used to drive the compressor 26. The resulting expanded medium A" output from an outlet of the second turbine 32 is cooler and has a lower pressure than the expanded medium A" provided at the inlet thereof. In some embodiment, all or at least a portion of the flow of expanded medium A" may be configured to bypass the second turbine 32 via bypass conduit 58.

From the second turbine 32 or the bypass conduit 58, the expanded medium A" is provided to a second heat exchanger 60. In an embodiment, the second heat exchanger is another or second air-liquid heat exchanger 60 and the expanded medium A" is thermally coupled to a second liquid loop 62 through which a second liquid L2 circulates. However, embodiments where the second heat exchanger 60 is an air-air heat exchanger are also within the scope of the disclosure. In the illustrated, non-limiting embodiment, the second liquid L2 provided at the second air-liquid heat exchanger 60 is different than the liquid L1 used at the first air-liquid heat exchangers 54.

Within the second air-liquid heat exchanger 60, thermal energy is transferred between the expanded medium A" and the liquid L2. In an embodiment, the expanded medium A" is cooled by the liquid L2, and the resulting warmer second liquid L2 is then directed to one or more liquid cooled heat loads. Because heat is transferred to the second liquid L2 of the liquid loop 62 from the expanded medium A" at the second air-liquid heat exchanger 60, the second liquid loop 62 may be considered a cold or cooling liquid loop.

The expanded medium A" provided at the outlet of the second air-liquid heat exchanger 60 may be controlled between 0°F and 35°F depending on the altitude of the aircraft. The conditioned, expanded medium A" leaving the second air-liquid heat exchanger 60 may be provided to one or more loads, illustrated schematically at 80 via a conduit 82. These loads include but are not limited to three potential destinations: the cockpit, the forced air-cooled equipment, or a bay vent. In some embodiments, at least a portion of the conditioned, expanded medium A" at the outlet of the second air-liquid heat exchanger 60 is provided to the regeneration heat exchanger 40 via a regeneration pathway 44 (as the diverted air DA) previously described herein. It should be understood that the environmental control system 20 illustrated and described herein is intended as an example only, and that an ECS having another suitable flow configuration for conditioning one or more mediums is within the scope of the disclosure. For example, embodiments having multiple thermodynamic devices and/or embodiments including a thermodynamic device having only a single turbine are within the scope of the disclosure.

The elements of the ECS 20 are connected via valves, tubes, pipes, and the like. Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium A in any portion of the system can be regulated to a desired value.

In the illustrated, non-limiting embodiment, a secondary system, illustrated at 70, is thermally coupled to the environmental control system 20. In an embodiment, the secondary system 70 is a vapor cycle system. As shown, the secondary system 70 includes a compressor 72, a condenser 74 or heat rejection heat exchanger, an expansion valve 76, and an evaporator 78 or heat absorption heat exchanger arranged to form a closed fluid loop. A working fluid R, such as a refrigerant, for example, is configured to flow from the compressor 72 to the condenser 74, to the expansion valve 76, and to evaporator 78 in series. In an embodiment, an electric motor 80 is operably coupled to the compressor 72 to produce work that the compressor 72 uses to compress the working fluid R. However, embodiments where the compressor 72 is driven alternatively or additionally by another mechanism, such as by a turbine for example, are also within the scope of the disclosure.

The environmental control system 20 may be thermally coupled to the secondary system 70. In the illustrated, non-limiting embodiment, the environmental control system 20 is thermally coupled to the secondary system 70 via at least one of the liquid cooling loops. For example, the first liquid loop 56 may be thermally coupled to both the environmental control system 20 and the secondary system 70. As shown, the first liquid L1 at the outlet of the air-liquid heat exchanger 54 of the environmental control system, is provided to the condenser 74. Within the condenser 74, heat is transferred to the liquid L1 from the secondary fluid R. The heated liquid L1 may then be provided to a downstream load. In an embodiment, liquid loop 56 is closed loop and the liquid L1 output from the condenser 74 may be provided to the air-liquid heat exchanger 54. However, embodiments where the liquid L1 output from the condenser 74 is provided to another component of the liquid loop are also contemplated herein.

Alternatively, or in addition, the liquid loop 62 may be thermally coupled to both the environmental control system 20 and the secondary system 70. As shown, from the outlet of the second air-liquid heat exchanger 60 of the environmental control system, the second liquid L2 is provided to the evaporator 78. Within the evaporator 78, heat is transferred from the second liquid L2 to the working fluid R, causing the working fluid to evaporate. The resulting cooler second liquid L2 may then be provided to a downstream load. In an embodiment, liquid loop 62 is closed loop and the liquid L2 output from the evaporator may be provided to the second air-liquid heat exchanger 60. However, embodiments where the second liquid L2 output from the evaporator 78 is alternatively, or additionally provided to another component of the liquid loop 62 are also contemplated herein.

In an embodiment, the first liquid L1 of the first liquid loop 56 is fuel. However, embodiments where the first liquid is another fluid are also contemplated herein. For proper engine operation, fuel must be maintained at or below a maximum temperature. In the event that the fuel temperature exceeds the maximum operating temperature, the engine configured to receive the fuel will automatically shut down to prevent damage.

In an embodiment, operation of the ECS 20 is controllable such that the first liquid L1 output from an outlet of the air-liquid heat exchanger 54 has a desired temperature, such as less than the maximum operating temperature of the first liquid L1. In an embodiment, the first liquid L1 is provided to the condenser 74 of the secondary system 70 at or below a specific condenser temperature, such as approximately 130°F for example, to be able to cool the working fluid R and ensure proper operation of the vapor compression cycle of the secondary system 70. The temperature of the first liquid L1 provided to the air-liquid heat exchanger 54 may be dependent on the external or ambient air temperature. For example, on a normal or standard temperature day the temperature of the first liquid L1 has a first temperature of less than 100°F and may require little cooling or no cooling within the air-liquid heat exchanger 54. Similarly, on a hot day, the first liquid L1 may be as high as 160°F. In such instances, the first liquid L1 will require significant cooling to reach the specific condenser temperature. Accordingly, the amount of heat removed from the first liquid L1 at the air-liquid heat exchanger 54 may vary based on the ambient air temperature to achieve the desired condenser temperature.

The heat removed from the first liquid L1 at the air-liquid heat exchanger 54 is controlled in part by at least one of the amount and the temperature of the medium provided to the air-liquid heat exchanger 54. In an embodiment, one or more valves of the ECS 20 are operable to control the flow of medium A provided to ECS 20 and therefore to the air-liquid heat exchanger 54. During operation of aircraft on a normal or standard temperature day, the temperature of the first liquid L1 provided to the air-liquid heat exchanger is very close to, such as ± 10°F (higher or lower) for example, the desired condenser temperature. Accordingly, limited or even minimal cooling of the first fluid is required. Because the medium needs to absorb only a small amount of heat from the first liquid L1 at the air-liquid heat exchanger 54, the amount of medium A provided to inlet 22 of the ECS 20 can be significantly reduced. For example, in embodiments where the medium A is bleed air, the engine bleed extraction may be about 0.25 PPS (compared to 1.5PPS for existing systems).

During operation on a hot temperature day, the amount of cooling of the first liquid L1 to be performed by the medium A at the air-liquid heat exchanger 54 is increased. As a result, the amount of medium A provided to the inlet 22 of the ECS 20 pack may be increased. Alternatively, or in addition, the amount of expansion of the compressed medium A' that occurs within the first turbine 28 may be increased. In an embodiment, during operation on a hot temperature day the compressed medium A' or expanded medium A" of the ECS 20 is operable to cool both the first liquid L1 of the first liquid loop 56 and the second liquid L2 of the second liquid loop 62. During operation on a hot temperature day, the engine bleed extraction may be between about 1.0 PPS and 1.3PPS. However, on a hot temperature day, the bleed engine extraction is less, for example 25% less, than that of an existing system on a standard temperature day.

By thermally coupling the at least one liquid loop to both the ECS 20 and the secondary system 70, the flow of medium A can be controlled to meet the cooling demands of the one or more loads associated with the ECS 20 while minimizing the amount of medium A extracted from an engine. Such control results in an increase in thrust and therefore improve the range covered by a predetermined amount of fuel maintaining the fuel within a desired operating temperature.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present invention will include all embodiments falling within the scope of the claims.

## Claims

1. An air conditioning system comprising:
an environmental control system (20) configured to condition a flow of medium, the environmental control system including:
a thermodynamic device (24) having a compressor (26) and at least one turbine (28) operably coupled by a shaft; (30) and
at least one heat exchanger (34);
a secondary system (70) having a working fluid circulating therethrough; and
at least one liquid loop (56) having at least one liquid flowing therethrough, the at least one liquid loop being fluidly connected to the at least one heat exchanger, wherein the environmental control system is thermally coupled to the secondary system, via the at least one liquid loop;
wherein the at least one liquid provided at an outlet of the at least one heat exchanger is operable to cool the working fluid of the secondary system.

2. The system of claim 1, wherein the secondary system includes a condenser (74), the condenser being arranged downstream from the at least one heat exchanger relative to a flow of the at least one liquid, and optionally wherein the condenser is located directly downstream from the at least one heat exchanger relative to the flow of the at least one liquid.

3. The system of claim 1 or 2, wherein the at least one liquid includes a fuel.

4. The system of any preceding claim, wherein the at least one heat exchanger further comprises a first heat exchanger (54) and a second heat exchanger (60), the second heat exchanger being arranged downstream from the first heat exchanger relative to the flow of medium.

5. The system of claim 4, wherein the at least one liquid loop having the at least one liquid flowing therethrough further comprises a first liquid loop having a first liquid and a second liquid loop having a second liquid, the first liquid loop being fluidly connected to the first heat exchanger and the second liquid loop being fluidly connected to the second heat exchanger, and optionally wherein the second liquid is different than the first liquid.

6. The system of claim 5, wherein the secondary system includes a condenser and an evaporator (78), the condenser being arranged downstream from the first heat exchanger relative to a flow of the first liquid and the evaporator being arranged downstream from the second heat exchanger relative to a flow of the second liquid.

7. The system of any preceding claim, wherein the at least one heat exchanger is arranged downstream from the at least one turbine relative to the flow of medium.

8. A method of operating an air conditioning system comprising:
providing an environmental control system (20) thermally coupled to a secondary system (70) by at least one liquid loop (56), the at least one liquid loop having a flow of at least one liquid circulating therethrough;
circulating a working fluid within the secondary system; and
conditioning a medium within the environmental control system to form a conditioned medium, wherein conditioning the medium includes using the medium as a heat sink to cool the working fluid of the secondary system.

9. The method of claim 8, wherein using the medium as a heat sink to cool the working fluid further comprises using the medium as a first heat sink to cool at least one liquid circulating through the at least one liquid loop and then using the at least one liquid as a second heat sink to cool the working fluid of the secondary system.

10. The method of claim 9, wherein the at least one liquid loop further comprises a first liquid loop having a first liquid and a second liquid loop having a second liquid, using the medium as a heat sink to cool the working fluid further comprises using the medium as the heat sink to cool the first liquid, and optionally further comprising transferring heat to the working fluid via the second liquid.

11. The method of any of claims 8 to 10, further comprising adjusting the heat sink formed by the medium in response to an ambient air temperature.

12. The method of claim 11, wherein adjusting the heat sink includes increasing an amount of heat absorbed by the medium, and/or wherein adjusting the heat sink further comprises controlling a flow of the medium provided to an inlet of the environmental control system.

13. The method of claim 11, wherein the environmental control system further comprises a thermodynamic device (24) including a compressor (26) (28) operably coupled by a shaft (30), wherein conditioning the medium further includes compressing the medium via the compressor to form a compressed medium and extracting energy from the compressed medium via the turbine to form an expanded medium, wherein the energy extracted from the compressed medium is used to drive the compressor.

14. The method of claim 13, wherein adjusting the heat sink further comprises controlling a flow of medium provided to the turbine.

15. The method of any of claims 8 to 14, wherein at least one liquid circulating through the at least one liquid loop is a fuel.
